# EUROPEAN PATENT APPLICATION

(11) **EP 0 723 357 A2**
(43) Date of publication of application: **24.07.1996**
(21) Application number: 96100463.7
(22) Date of filing: 13.01.1996
(51) Int. Cl.: H04M 1/72, H03J 9/00

(54) **Entertainment appliance, such as a receiver and/or reproducer of radio electric signals, in particular television signals, having a remote control with a telephonic microphone incorporated**

(30) Priority: 18.01.1995 IT RM950036
(71) Applicant: EDICO S.r.l., I-00197 Roma (IT)
(72) Inventor: d'Errico, Federico, Dr., I-00186 Roma (IT)

(57) **Abstract**

An entertainment appliance is described, such as a receiver and/or reproducer of radio-electric signals, in particular television signals, comprising reproducing means of video and/or audio signals and a remote control device, the transmitter of which comprises a microphone, for realising a telephone conversation; the main characteristic of the described appliance consists in that said remote control device provides means which allow for realising between the signal transmitter and the relative signal receiver, a transmission even if the transmitter is inclined at an angle in the range of 90°.

## Description

The present invention refers to an entertainment appliance, such as a receiver and/or reproducer of radio-electric signals, in particular television signals, comprising reproduction means of video and/or audio signals and a remote control device.

An entertainment appliance of the type described above is known; practically any television, video cassette recorder, disc reader, audio reproducer, considered as a single element or together with other appliances, falls within the aforementioned description.

It is known that such types of appliances are used by a user being seated a certain distance away, and that moreover, while the appliances are being used, the telephone may ring; and that it is inconvenient having to get up to answer, perhaps in reply to a wrong number.

It is known from the American patent n° 4,338,492 of providing a television receiver with means which allow it to be used in a way for realising a two way telephone conversation; the microphone is arranged within the frontal panel of the television.

Such arrangement has several inconveniences:
- the phenomenon of reverberation, due to the fact that the area in which the television is found does not have the acoustic characteristics of an auditorium;
- possible Larsen effect due to the fact that the speaker is also situated in the television;
- environmental noise which disturbs the voice of the speaker, etc.

It is also known to incorporate a microphone in a remote control transmitter with the aim of imparting vocal commands to the remote controlled appliance.

Such arrangement however, hot having the purpose of transmitting vocal signals to the entertainment appliance, but only coded commands, provides for the direct conversion of the audio into codes in the remote control itself; therefore a transmission of the audio signal by the remote control to the entertainment appliance is not carried out, but only the sending of normal control codes is provided, as is so with most remote controls, equipped only with command keys.

It is also known from the American patent N° 4,392,022 that, for realising a telephone conversation, a microphone be included in the remote control transmitter of a television, the likes of which use infra-red rays for transmitting the information to the main appliance.

Such arrangement does however have the inconvenience that, so as to direct the infra-red rays in a distinct direction, it is necessary to always keep the transmitter in an established position, i.e. pointed towards the signals receiver.

The purpose of the present invention is that of indicating how it is possible to improve, if compared to the known art, the ease of use of an entertainment appliance, having the possibility of realising telephone conversations.

So as to reach such purposes the subject of the present invention is an entertainment appliance, such as a receiver and/or reproducer of radio-electric signals, in particular television signals, comprising reproduction means of video and/or audio signals and a remote control device, the transmitter of which includes a microphone, for realising a telephone conversation, characterised in that said remote control device provides means that allow for realising between the transmitter of signals and the relative signals receiver, a transmission even if the transmitter is inclined at an angle of approximately 90°.

The present invention is based on the acknowledgement of the fact that it is surely advantageous, for a telephone conversation, that the microphone be close to the mouth of the user, as is usually the case with normal telephones; and on the fact that the entertainment appliance of the type mentioned above already has an object with can equally function as a telephone: the transmitter of the remote control.

The present invention therefore proposes to incorporate a microphone in the remote control transmitter, and to provide for a conversion of the audio signal, received by the microphone, in an appropriate form for being transmitted to the entertainment appliance; there are two proposed ways:
- the first is to convert the audio signal into impulses of an ultrasonic frequency, for instance 40 KHz, the impulses being modulated in width according to the audio frequency, and to send such impulses to the entertainment appliance by way of normal emitting diodes of infra-red rays.
- the second possibility is that of modulating the audio with a radio frequency carrier (for instance 40 MHz) and to irradiate it, even at a low power so as not to disturb the reception of other receivers of radio-electric signals arranged nearby.

The first method has the advantage of taking advantage of the normal infra-red channel already available on a remote control device and on the entertainment appliance; so as to overcome the directioning drawback, it is proposed to provide for one or more positioning diodes in a position being rotated at 90° compared to the usual diodes, or at least two infra-red rays emitting devices, arranged in a way to irradiate said rays according to two directions which between them make up an angle being greater than 60°.

The second method has the advantage of not being directional, and therefore allowing to hold the remote control device in any position whilst speaking. So as to make the transmission less prone to interferences, in this second case a plurality of available channels can be provided (for instance 99) and allowing the user to choose one, by way of the remote control and an appropriate sequence of commands, which results in being better from an interference point of view.

With the first method the remote control transmitter comprises an ultrasonic frequency signal generating circuit (40 MHz) and a modulation circuit for modulating said ultrasonic frequency signal with the audio signal produced by the microphone, and the entertainment appliance comprises corresponding means for receiving and demodulating said ultrasonic frequency signals.

The modulation circuit is preferably a modulation circuit with a PCM system of said ultrasonic frequency signal; the ultrasonic frequency signal is then transmitted by way of infra-red rays to the entertainment appliance.

According to the second method, the remote control transmitter comprises a radio-frequency signal generator (40 KHz) and a modulation circuit for modulating said radio-frequency signal with the audio signal produced by the microphone, and the entertainment appliance comprises means for receiving and demodulating said radio-frequency signals; the modulation can take place preferentially with the modulation system in frequency of said radio-frequency signal.

Further characteristics and advantages of the present invention shall result in being clear from the following detailed description and annexed drawings, supplied purely as an explanatory and non limiting example applied in the case of a television signal receiver, wherein:
- figure 1 schematically represents the remote control transmitter of a television, in a first version of the invention, seen from above;
- figure 2 schematically represents the remote control transmitter of figure 1, in a side view;
- figure 3 schematically represents a part of the electric circuit of a television according to a first version of the invention;
- figure 4 schematically represents a part of the electric circuit of a television according to a second version of the invention.

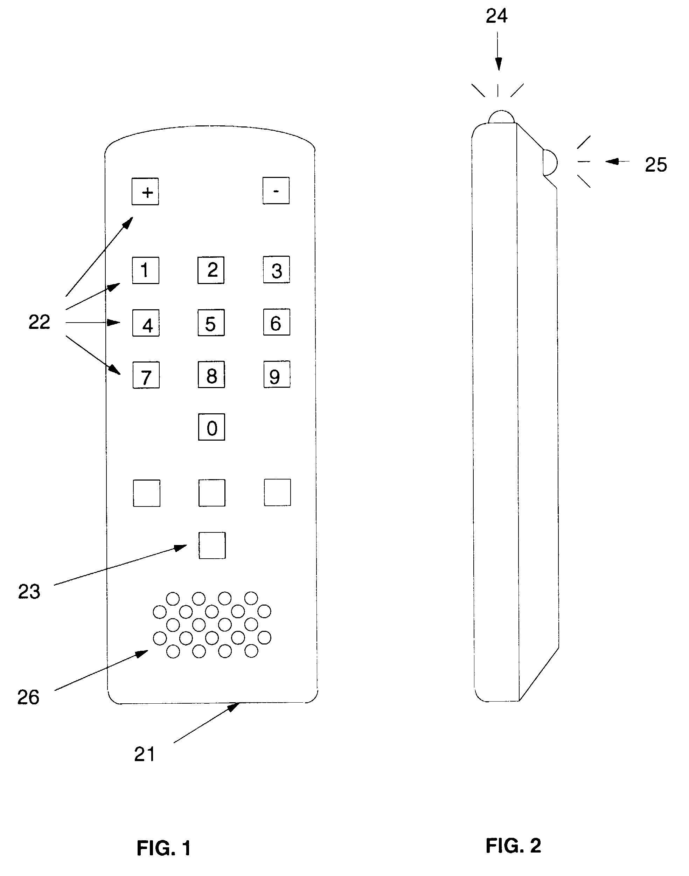

In figure 1 a remote control transmitter is schematically represented, in a first version of the invention, seen from above. Reference number 21 indicates the container of the remote control device; such container shall conveniently be realised in a plastic material, according to know techniques, preferably in shock resistant material.

Reference number 22 indicates a plurality of command buttons or keys, distinguished in various ways, usually present on remote control devices of televisions or of other entertainment appliances. Reference number 23 represents a key or button specifically destined to enable or disable the 'telephone conversation' mode.

Reference number 26 indicates a grid behind which a microphone is arranged for intercepting the users voice, in the 'telephone conversation' mode.

Figure 2 represents in a schematic way a side view of the remote control transmitter of figure 1.

The reference number 24 indicates one or more infra-red rays transmitter diodes, arranged, as uaual at the extremity of the remote control, so as that, holding the remote control in an approximate horizontal position, the rays produced are directed towards the receiver.

Reference number 25 indicates one or more additional transmitter diodes of infr-red rays, arranged, according to the invention, at approximately 90° from the diodes 24, in such a way that the infra-red rays produced are directed towards the receiver when the remote control is held in an approximate vertical position.

In such manner the user, in the 'telephone conversation' mode can hold the remote control in front of his mouth and the infra-red rays are still received in the same way by the receiver.

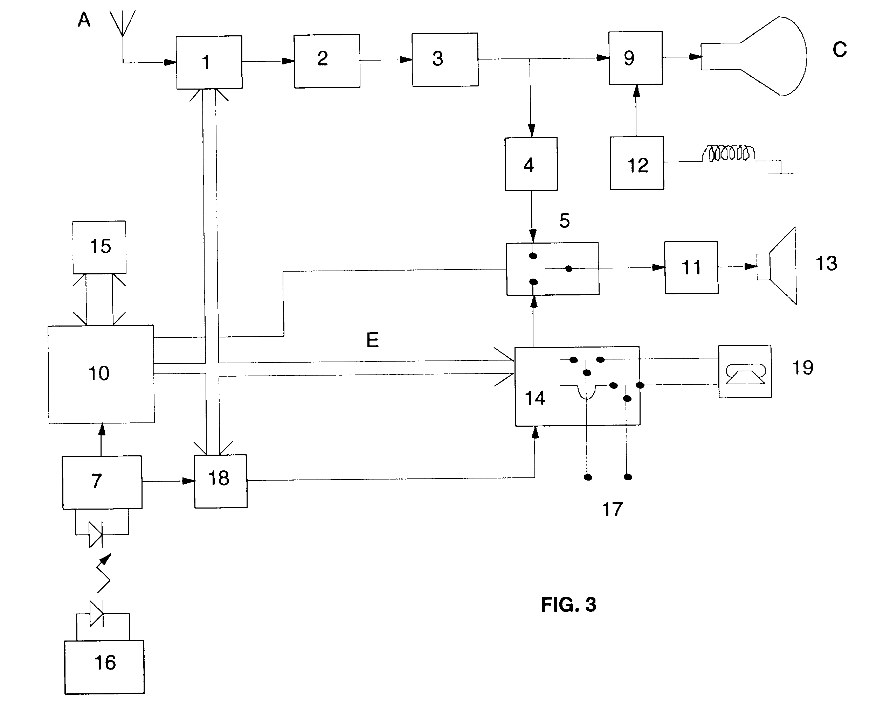

Figure 3 represents in a schematic manner a part of the electric circuit of a television in a first version of the invention.

The reference symbol A indicates the receiving antenna; the reference number 1 indicates the tuner of the receiver; the reference number 2 indicates the intermediate frequency amplifier; reference number 3 indicates the video detector; from the detector 3 the composite video signal reaches on one side the audio detecting circuit 4 and on the other side the video amplifier 9.

A deflection circuit 12 generates the vertical and horizontal scanning signals for the CRT C.

From the video amplifier 9 the image signals reach the television CRT indicated with the symbol C.

From the audio detector 4 the audio signals reach an electronic switching circuit 5; the telephonic audio signals also reach the same switch 5 coming from a circuit 14, connected to the telephone line 17; the circuit 14 is substantially an interface between the telephone line and the control unit 10 (as is mentioned further in the text); the switch 5 may be for instance of the known type TEA 2014.

The interface 14 provides for surveying the line and comprises a double switch that normally connects the telephone line 17 to the telephone 19; in the case of enabling the 'telephone conversation' mode (by way of the key 23), the switch changes position and connects the telephone line with the television receiver.

The output audio signals from the switch 5 reach a final amplifier 11 and, from here, the loudspeaker 13.

The remote control device is indicated with the reference number 16; it is equipped with diode emitters of infra-red rays that irradiate the signals towards a receiver of signals indicated with the reference number 7; the receiver 7 is connected to a central control unit indicated with the number 10; the latter may for instance be a microcontroller of the known type 'I²C bus'; by way of such 'bus' the microcontroller 10 is connected to the tuner 1, which controls the tuning, with the circuit 14 so as to enable or disable it according to necessity, with a LED display 15 upon which it can display the telephone number with which it is eventually in contact, and with a circuit 18 which will be mentioned later in the text. Moreover the controller 10 is obviously in contact with the receiver of the remote control 7 and with the switch 5, by way of the conductor E.

In a preferred version of the invention the display 15 flashes in the case of an incoming call on the telephone line 17; whereas to call the user has to press the key 23 and digit the number to call by way of the numeric keys on the remote control unit; the control unit 10 provides for forming the number called and to send it to the telephone line 17 by way of the interface 14.

The remote control 16 is of the type illustrated in figures 1 and 2. The receiver 7 is also connected to the circuit 18, that provides for decoding the audio signals received by the remote control, through the circuit 7, when the 'telephone conversation' mode is enabled.

According to one of the preferred modes of realising the invention, when the 'telephone conversation' mode has been enabled by pressing the key 23, the audio signals intercepted by the microphone incorporated in the transmitter of the remote control 16 are used for modulating with the system PCM an ultrasonic signal of 40 KHz, generated in the same transmitter 16, which is then transmitted as infra-red rays through the abovementioned emitter diodes.

The corresponding signals, received by the receiver 7, are then demodulated in the circuit 18 and sent to the telephone line 17 by way of the circuit 14.

When the key 23 is pressed on the remote control, the controller 10 provides for activating the telephone conversation mode, switching the circuit 5 and enabling the circuits 14 and 18.

The incoming telephone signals thus reach the loudspeaker 13 which reproduces them, while the signals generated by the microphone incorporated in the remote control 16 are sent to the telephone line 17.

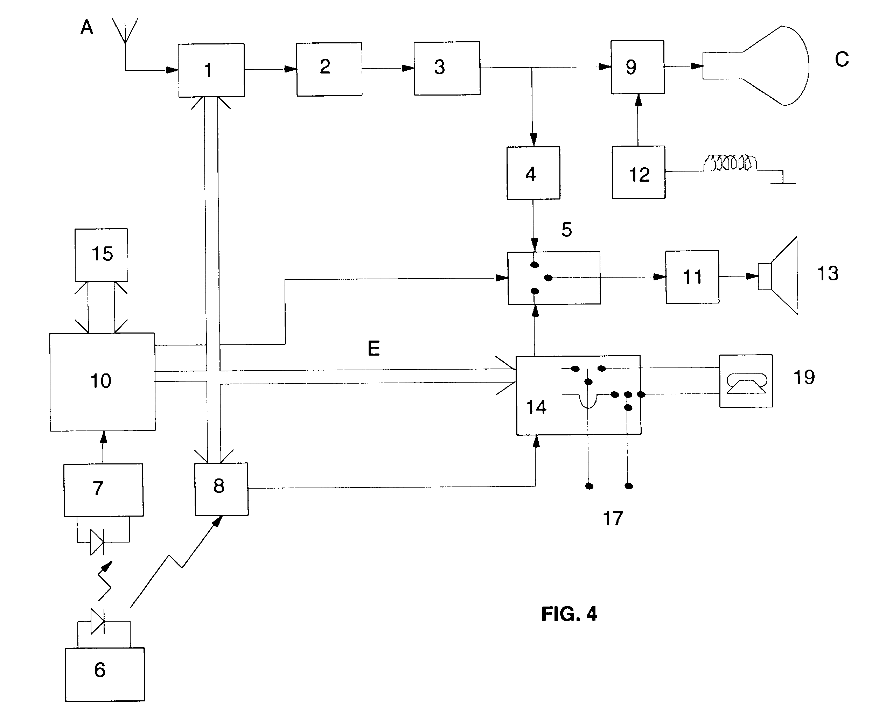

Figure 4 represents in a schematic manner a part of the electric circuit of a television in a second version of the invention.

The circuit of figure 4 differs from that of figure 3 only for the fact that the audio signals, generated by the microphone incorporated in this case in a remote control 6, are modulated with the frequency modulation system, on a radio-frequency signal of 40 MHz, generated in the same remote control; the modulated radio-frequency signal is then irradiated and intercepted by a circuit 8, where it is detected and successively sent to a telephone line 17 by way of the circuit 14.

The normal command signals are on the other hand transmitted to the receiver 7 by way of the infra-red diodes as is the usual case.

The remote control 6 can be, with regards the exterior appearance, similar to the remote control illustrated in figures 1 and 2; the second emitting diode 25 is no longer necessary; it is however useful to provide a further command key, which for the sake of clarity shall be called key S the function of which will now be explained.

So as to make the transmission safer from interferences, in a preferred embodiment of the invention, the possibility is provided of selecting one, by way of the remote control 21, from a plurality of transmission channels available (for instance 99).

Such selection can be effected by the user pressing the key S and therefore pressing a couple of numbered keys (example: 05,22,98,etc.); such couple identifies one of the 99 transmission frequencies of the signals; the pressing of the two numeric keys resets the normal functioning of the remote control.

The user can therefore select the frequency that presents the least interference.

It is clear that numerous variants are possible to the entertainment appliance subject of the present invention, without for this departing from the novelty principles inherent in the innovative idea, as it is clear that in the practical realisation of the invention the materials and the forms of the illustrated details may be different, and they may be substituted with technically equivalent elements.

For instance in the case of use of the system of radio-frequency, so as to protect the safety of the conversation, the technique of inserting an identity code can be used, that couples every appliance to its remote control; in this way the appliance refuses to operate if it does not receive signals coming from its own remote control unit.

## Claims

1. Entertainment appliance, such as a receiver and/or reproducer of radio-electric signals, in particular television signals, comprising reproducing means of video and/or audio signals and a remote control device, the transmitter of which comprises a microphone, for realising a telephone conversation, characterised in that said remote control device (21) provides means (24,25) which allow for realising between the signal transmitter and the relative signal receiver, a transmission even if the transmitter is inclined at an angle in the range of 90°.

2. Entertainment appliance, according to claim 1, characterised in that said remote control transmitter (21) comprises means for effecting a conversion of the audio signal, intercepted by the microphone, in a form being apt at being transmitted to the entertainment appliance, and means for transmitting it.

3. Entertainment appliance, according to claims 1 or 2, characterised in that said remote control transmitter (21) comprises a generator of radio-frequency signals (40 MHz) and a modulation circuit for modulating said radio-frequency signal with the audio signal produced by the microphone, and that said entertainment appliance comprises means (8) for receiving and demodulating said radio-frequency signals.

4. Entertainment appliance, according to claim 3, characterised in that said modulation circuit is a modulation circuit in frequency of said radio-frequency signal.

5. Entertainment appliance, according to claim 3, characterised in that said generator of radio-frequency signals can generate a plurality of different frequencies upon choice.

6. Entertainment appliance, according to claim 5, characterised in that said remote control provides an appropriate key (S) and that, pressing such key and then a pair of numeric keys, one from among said plurality of transmission frequencies is selected.

7. Entertainment appliance, according to claim 3, characterised in that the insertion of an individual protection code is provided that couples the appliance to its remote control.

8. Entertainment appliance, according to claim 3, characterised in that the irradiation of said radio-frequency signal takes place with low power.

9. Entertainment appliance, according to claim 1 or 2, characterised in that said remote control transmitter (21) comprises a generating circuit of ultrasonic frequency signals (40 KHz) and a modulation circuit for modulating said ultrasonic frequency signal with the audio signal produced by the microphone, and that said entertainment appliance comprises means (7) for receiving and demodulating said ultrasonic frequency signals.

10. Entertainment appliance, according to claim 9, characterised in that said modulation circuit is a modulation circuit with a PCM system of said ultrasonic frequency signal.

11. Entertainment appliance, according to claim 9 or 10, characterised in that said ultrasonic frequency signal is transmitted by means of infra-red rays to the entertainment appliance.

12. Entertainment appliance, according to claim 11, characterised in that said remote control transmitter (21) comprises at least two emitter devices (24; 25) of infra-red rays, arranged in a way so as to irradiate said rays according to two directions between which make up an angle being greater than 60°.

13. Entertainment appliance, according to one or more of the previous claims, characterised in that it comprises a display (15) on which the telephone number contacted is displayed.

14. Entertainment appliance, according to claim 13, characterised in that said display flashes in the case of a call coming from a telephone line.

15. Entertainment appliance, according to one or more of the previous claims, characterised in that for making a call the user has to press an appropriate key (23) and then digit the number to be called by way of the numeric keys on said remote control transmitter (21), that a control unit (10) provides for executing the number called and to send it over the telephone line (17) by way of an interface circuit (14).
